# EUROPEAN PATENT SPECIFICATION

(11) **EP 4 572 883 B1**
(45) Date of publication and mention of the grant of the patent: **20.05.2026**
(21) Application number: 23753909.3
(22) Date of filing: 08.08.2023
(51) Int. Cl.: B01J 19/12

(54) **INDUCTIVELY POWERED LIGHT ENGINE FOR SPINNING DISC REACTOR**
INDUKTIV BETRIEBENE LICHTMASCHINE FÜR EINEN DREHSCHEIBENREAKTOR
MOTEUR DE LUMIÈRE ALIMENTÉ PAR INDUCTION POUR RÉACTEUR À DISQUE TOURNANT

(30) Priority: 16.08.2022 EP 22190451
(43) Date of publication of application: 25.06.2025
(73) Proprietor: Signify Holding B.V., 5656 AE Eindhoven (NL)
(72) Inventor: SWEEGERS, Norbertus, Antonius, Maria, 5656 AE Eindhoven (NL); BROERSMA, Remy, Cyrille, 5656 AE Eindhoven (NL)
(74) Representative: Verweij, Petronella Daniëlle
(86) International application number: PCT/EP2023/071886
(87) International publication number: WO 2024/037926

(56) References cited:
- DE-A1- 102013 103 517
- US-A1- 2013 175 227
- US-A1- 2018 280 910

## Description

### FIELD OF THE INVENTION

The invention relates to a photoreactor assembly comprising a light source arrangement, a photochemical reactor, and an electrical induction based electrical power system. The invention further relates to a method for treating a fluid with light source radiation from a photoreactor assembly.

### BACKGROUND OF THE INVENTION

Photocatalytic reactors are known in the art. For instance, US2016304368A1 describes an active photocatalytic reactor configured to process biological culturing water with an accelerated process. Water to be used in a biological culturing system is stabilized with pollutants in the water reduced. The active photocatalytic reactor is less affected by outside environment while having faster activating speed. The active photocatalytic reactor can further be combined with a traditional filter to form a serial or parallel connection for more effectively purifying the culturing water with damage to the whole system avoided.

### SUMMARY OF THE INVENTION

Photochemical processing or photochemistry relates to the chemical effect of light. More in general photochemistry refers to a (chemical) reaction caused by absorption of light, especially ultraviolet light (radiation), visible light (radiation) and/or infrared radiation (light). Photochemistry may for instance be used to synthesize specific products. For instance, isomerization reactions or radical reactions may be initiated by light. Other naturally occurring processes that are induced by light are e.g. photosynthesis, or the formation of vitamin D with sunlight. Photochemistry may further e.g. be used to degrade/oxidize pollutants in water or e.g. air. Photochemical reactions may be carried out in a photochemical reactor or "photoreactor".

One of the benefits of photochemistry is that reactions can be performed at lower temperatures than conventional thermal chemistry and partly for that reason thermal side reactions that generate unwanted by-products are avoided.

Furthermore, commonly used light sources in photochemistry may include low or medium pressure mercury lamps or fluorescent lamps. In addition to that, some reactions may require a very specific wavelength region, and they may even be hampered by light from the source emitted at other wavelengths. In these cases, part of the spectrum may have to be filtered out, which may lead to a low efficiency and complex reactor design. The state of the art, represented by US 2018/280910 describes photo-reactor assembly comprising a light source arrangement in a photochemical reactor, wherein solid state light sources are configured to generate radiation selected from UV, visible, and IR; a reactor chamber configured in a light-receiving relationship with the light sources and a spinning disk in the reaction chamber.

In the recent years the output of Light Emitting Diodes (LEDs), both direct LEDs with dominant wavelengths ranging for instance from UVC to IR wavelengths, and phosphor-converted LEDs, has increased drastically, making them interesting candidates for light sources for photochemistry. High fluxes can be obtained from small surfaces, especially if the LEDs can be kept at a low temperature.

Spinning disk reactors are a type of chemical reactor used because the small area between a fast rotating disc and the reactor wall may result in very high mixing performance. High gaseous or liquid pressures occur for chemical processes in such spinning disk reactors. The high mixing performance and high pressure may result in a high efficiency of the chemical reaction. However, for photochemical reactors, a spinning disk reactor appears not to be commercially available yet, as the high pressures can cause breaking of the transparent window separating the light sources from the reactor chamber. In the chemical and pharmaceutical industry such an explosive environment with organic substances is highly unwanted due to safety concerns.

Hence, it is an aspect of the invention to provide an alternative photoreactor assembly, which preferably further at least partly obviates one or more of above-described drawbacks. The present invention may have as object to overcome or ameliorate at least one of the disadvantages of the prior art, or to provide a useful alternative.

According to a first aspect, the invention provides a photoreactor assembly (also: "reactor assembly" or "assembly") that may comprise a light source arrangement. Such photoreactor assembly may further comprise a photochemical reactor. Moreover, such photoreactor assembly may comprise an induction based electrical power system (also: "electrical power system" or "power system"). In embodiments, the light source arrangement may comprise one or more light sources. The light sources may be configured to generate light source radiation (or: "light source light"). Such light source radiation may be selected from one or more of ultraviolet (UV) radiation, visible radiation, and infrared (IR) radiation. Further, the light sources may comprise solid state light sources. In embodiments, the photochemical reactor may comprise a reactor chamber. The reactor chamber may be configured to host a first fluid (also: "reactor fluid" or "reactor chamber fluid"). The first fluid may be treated with the light source radiation. Further, the reactor chamber may be configured in a light-receiving relationship with the one or more light sources. In embodiments, the photochemical reactor may comprise a spinning disk reactor. The spinning disk reactor may comprise a disk (also: "spinning disk" or "reactor disk" or "rotatable disk"). Moreover, the disk may be at least partly configured in the reaction chamber. In embodiments, the induction based electrical power system may comprise an electrical power transmitter-receptor pair. The electrical power transmitter-receptor pair may comprise an electrical power transmitter (or: "transmitter") and an electrical power receptor (also: "electrical power receiver" or "receptor" or "receiver"). Especially, the electrical power receptor may be functionally coupled to the light source arrangement. Therefore, in embodiments the invention provides a photoreactor assembly comprising (i) a light source arrangement, (ii) a photochemical reactor, and (iii) an induction based electrical power system; wherein: the light source arrangement comprises one or more light sources, wherein the light sources are configured to generate light source radiation selected from one or more of UV radiation, visible radiation, and IR radiation, wherein the light sources comprise solid state light sources; the photochemical reactor comprises a reactor chamber configured to host a first fluid to be treated with the light source radiation, wherein the reactor chamber is configured in a light-receiving relationship with the one or more light sources; the photochemical reactor comprises a spinning disk reactor, wherein the spinning disk reactor comprises a disk at least partly configured in the reaction chamber; the induction based electrical power system comprises an electrical power transmitter-receptor pair, which comprises an electrical power transmitter and an electrical power receptor, wherein the electrical power receptor is functionally coupled to the light source arrangement. In certain embodiments, the invention provides a photoreactor assembly that may further comprise a rotor and a stator. The rotor may in specific embodiments be functionally coupled to the disk. Effectively, the phrase "the rotor being functionally coupled to the disk", and similar phrases, may essentially be equivalent to phrases like "the disk being functionally coupled to the rotor", and similar phrases. In other embodiments, the rotor may comprise the disk. In embodiments, the electrical power transmitter-receptor pair may be configured to generate an electrical current in the electrical power receptor. Such electrical current may be generated by rotation of one of the electrical power transmitter and the electrical power receptor relative to the other one of the electrical power transmitter and the electrical power receptor. In embodiments, one of the electrical power transmitter and the electrical power receptor may be comprised by the stator, while the other one of the electrical power transmitter and the electrical power receptor may be comprised by the rotor. Therefore, in certain embodiments, the photoreactor assembly further comprises a rotor and a stator, wherein the rotor is functionally coupled to the disk or comprises the disk; wherein the electrical power transmitter-receptor pair is configured to generate an electrical current in the electrical power receptor by rotation of one of the electrical power transmitter and the electrical power receptor relative to the other one of the electrical power transmitter and the electrical power receptor; wherein one of the electrical power transmitter and the electrical power receptor is comprised by the stator and the other one of the electrical power transmitter and the electrical power receptor is comprised by the rotor.

With the present invention, a photoreactor assembly may be provided comprising e.g. a spinning disk reactor. Such photoreactor assembly may be able to treat a fluid in the reactor chamber with the light source radiation with high mixing performance and high pressure due to a treatment of the first fluid in the reaction chamber. The high mixing performance and high pressure may result in a high efficiency process of the chemical reaction. The use of an electrical power system based on induction may ensure that the light source arrangement is sealed from the external environment, without power supply cables which may be sensitive to rotating and vibrating environments and may further be sensitive to heat and corrosive liquids. This may be particularly desirable with regards to safety concerns in the chemical and pharmaceutical associated with the use of photochemical spinning disk reactors. Hence, such photoreactor assembly may provide a high efficiency process of the chemical reaction with minimal safety concerns. Further, with the present invention, a photoreactor assembly may be provided that further comprises a rotor and a stator. Through arrangement of the electrical power transmitter-receptor pair in the rotor and the stator, the photoreactor assembly may exploit the already available rotor and stator configuration in a spinning disk reactor to generate the electrical energy to power the LEDs (and/or other light sources). Hence, such photoreactor assembly may have the additional benefit of generating electrical energy to power the light source arrangement as part of its standard operation.

As indicated above, the invention provides a photoreactor assembly. In embodiments, the photoreactor assembly may comprise a light source arrangement, a photochemical reactor, and an induction based electrical power system. The light source arrangement may comprise one or more light sources to generate light source radiation selected from one or more of UV radiation, visible radiation, and IR radiation.

The terms "light" and "radiation" are herein interchangeably used, unless clear from the context that the term "light" only refers to visible light. The terms "light" and "radiation" may thus refer to UV radiation, visible light, and IR radiation. In specific embodiments, especially for lighting applications, the terms "light" and "radiation" refer to visible light. In embodiments, the light source radiation may comprise UV radiation. The light source radiation may in further embodiments (also) comprise visible radiation. In yet further embodiments, the light source radiation may (also) comprise IR radiation. The term "UV radiation" is known to the person skilled in the art and relates to "ultraviolet radiation", or "ultraviolet emission", or "ultraviolet light", especially having one or more wavelengths in the range of about 10-380 nm. In embodiments, UV radiation may especially have one or more wavelength in the range of about 100-380 nm, such as selected from the range of 190-380 nm. Moreover, the term "UV radiation" and similar terms may also refer to one or more of UVA, UVB, and UVC radiation. UVA radiation may especially refer to having one or more wavelengths in the range of about 315-380 nm. UVB radiation may especially refer to having one or more wavelengths in the range of about 280-315 nm. UVC radiation, may further especially have one or more wavelengths in the range of about 100-280 nm. In embodiments, the light sources may be configured to provide light source radiation having wavelengths larger than about 190 nm. In embodiments, the light source radiation may include wavelengths in the 380-400 nm, which is in the art sometimes indicated as part of the UVA and in other art as part of the visible wavelength range.

The terms "visible", "visible light", "visible emission", or "visible radiation" and similar terms refer to light having one or more wavelengths in the range of about 380-780 nm. The term "IR radiation" especially relates to "infrared radiation", "infrared emission", or "infrared light", especially having one or more wavelengths in the range of 780 nm to 1 mm. Moreover, the term "IR radiation" and similar terms may also refer to one or more of NIR, SWIR, MWIR, LWIR, FIR radiation. NIR may especially relate to Near-infrared radiation having one or more wavelength in the range of about 750-1400 nm, such as 780-1400 nm. SWIR may especially relate to Short-wavelength infrared having one or more wavelength in the range of about 1400-3000 nm. MWIR may especially relate to Mid-wavelength infrared having one or more wavelength in the range of about 3000-8000 nm. LWIR may especially relate to Long-wavelength infrared having one or more wavelength in the range of about 8-15 µm. FIR may especially relate to Far infrared having one or more wavelength in the range of about 15-1000 µm.

In embodiments, the one or more light sources may comprise a plurality of light sources. Further, the light sources may especially comprise solid state light sources.

The term "light source" may in principle relate to any solid state light source known in the art. In a specific embodiment, the light source comprises a solid state LED light source (such as a LED or laser diode (or "diode laser")). The term "light source" may also relate to a plurality of light sources, such as 2-2000 (solid state) LED light sources. Hence, the term LED may also refer to a plurality of LEDs. Further, the term "light source" may in embodiments also refer to a so-called chips-on-board (COB) light source. The term "COB" especially refers to LED chips in the form of a semiconductor chip that is neither encased nor connected but directly mounted onto a substrate, such as a printed circuit board (or: "PCB"). Hence, a plurality of light emitting semiconductor light source may be configured on the same substrate. In embodiments, a COB is a multi LED chip configured together as a single lighting module.

The light source may have a light escape surface. Referring to LEDs it may for instance be the LED die, or when a resin is applied to the LED die, the outer surface of the resin. In principle, it may also be the terminal end of a fiber. The term escape surface especially relates to that part of the light source, where the light actually leaves or escapes from the light source. The light source is configured to provide a beam of light. This beam of light (thus) escapes from the light exit surface of the light source. Likewise, a light generating device may comprise a light escape surface, such as an end window. Further, likewise a light generating system may comprise a light escape surface, such as an end window.

The term "light source" may refer to a semiconductor light-emitting device, such as a light emitting diode (LEDs), a resonant cavity light emitting diode (RCLED), a vertical cavity laser diode (VCSELs), an edge emitting laser, etc... The term "light source" may also refer to an organic light-emitting diode (OLED), such as a passive-matrix (PMOLED) or an active-matrix (AMOLED). In a specific embodiment, the light source comprises a solid-state light source (such as a LED or laser diode). In an embodiment, the light source comprises a LED (light emitting diode). The terms "light source" or "solid state light source" may also refer to a superluminescent diode (SLED).

The term LED may also refer to a plurality of LEDs. In embodiments, the light source may comprise one or more micro-optical elements (array of micro lenses) downstream of a single solid-state light source, such as a LED, or downstream of a plurality of solid-state light sources (i.e. e.g. shared by multiple LEDs). In embodiments, the light source may comprise a LED with on-chip optics. In embodiments, the light source comprises a pixelated single LEDs (with or without optics) (offering in embodiments on-chip beam steering).

In embodiments, the light source may be configured to provide primary radiation, which is used as such, such as e.g. a blue light source, like a blue LED, or a green light source, such as a green LED, and a red light source, such as a red LED. Such LEDs, which may not comprise a luminescent material ("phosphor") may be indicated as direct color LEDs.

In other embodiments, however, the light source may be configured to provide primary radiation and part of the primary radiation is converted into secondary radiation. Secondary radiation may be based on conversion by a luminescent material. The secondary radiation may therefore also be indicated as luminescent material radiation. The luminescent material may in embodiments be comprised by the light source, such as a LED with a luminescent material layer or dome comprising luminescent material. Such LEDs may be indicated as phosphor converted LEDs or PC LEDs (phosphor converted LEDs). In other embodiments, the luminescent material may be configured at some distance ("remote") from the light source, such as a LED with a luminescent material layer not in physical contact with a die of the LED. Hence, in specific embodiments the light source may be a light source that during operation emits at least light at wavelength selected from the range of 380-470 nm. However, other wavelengths may also be possible. This light may partially be used by the luminescent material.

The light source may especially be configured to generate light source light having an optical axis (O), (a beam shape,) and a spectral power distribution. The light source light may in embodiments comprise one or more bands, having band widths as known for lasers.

The term "light source" may (thus) refer to a light generating element as such, like e.g. a solid state light source, or e.g. to a package of the light generating element, such as a solid state light source, and one or more of a luminescent material comprising element and (other) optics, like a lens, a collimator. A light converter element ("converter element" or "converter") may comprise a luminescent material comprising element. For instance, a solid state light source as such, like a blue LED, is a light source. A combination of a solid state light source (as light generating element) and a light converter element, such as a blue LED and a light converter element, optically coupled to the solid state light source, may also be a light source (but may also be indicated as light generating device). Hence, a white LED is a light source (but may e.g. also be indicated as (white) light generating device). The term "light source" herein may also refer to a light source comprising a solid state light source, such as an LED or a laser diode or a superluminescent diode. The "term light source" may (thus) in embodiments also refer to a light source that is (also) based on conversion of light, such as a light source in combination with a luminescent converter material. Hence, the term "light source" may also refer to a combination of a LED with a luminescent material configured to convert at least part of the LED radiation, or to a combination of a (diode) laser with a luminescent material configured to convert at least part of the (diode) laser radiation. In embodiments, the term "light source" may also refer to a combination of a light source, like a LED, and an optical filter, which may change the spectral power distribution of the light generated by the light source. Especially, the "term light generating device" may be used to address a light source and further (optical components), like an optical filter and/or a beam shaping element, etc. The term "solid state light source", or "solid state material light source", and similar terms, may especially refer to semiconductor light sources, such as a light emitting diode (LED), a diode laser, or a superluminescent diode.

The phrases "different light sources" or "a plurality of different light sources", and similar phrases, may in embodiments refer to a plurality of solid-state light sources selected from at least two different bins. Likewise, the phrases "identical light sources" or "a plurality of same light sources", and similar phrases, may in embodiments refer to a plurality of solid-state light sources selected from the same bin.

The photoreactor assembly, especially the photochemical reactor may comprise one or more light chambers (see further also below), especially a plurality of light chambers. In embodiments, the light source arrangement may at least partly be comprised within a light chamber and may comprise a support arrangement for the one or more light sources. The support arrangement may especially be configured to support the light sources. The term "light source arrangement" may herein refer to the arrangement of one or more light sources, especially a plurality of light sources., i.e., a spatial arrangement (such as relative to the photochemical reactor). The light source support arrangement may itself be supported by a support that comprises the light chamber, which may be referred to as light chamber support. When a plurality of light chambers are available, each light chamber may comprise a light source arrangement.

As indicated above, the invention provides a photoreactor assembly comprising a photochemical reactor. The term "reactor" may especially relate to a (photo)chemical reactor. The term may essentially relate to an enclosed (reactor) chamber in which a (photochemical) reaction may take place. The (photochemical) reaction may take place due to irradiation of a fluid with the light source radiation.

In further embodiments, the photochemical reactor may comprise a reactor chamber further comprising a flow reactor system. In embodiments, the reactor chamber and the light chamber may be configured in optical contact. Optical contact may refer to the transfer of light (or radiation) between two conformal surfaces, such as between the reactor chamber and light chamber. Hence, in embodiments radiation of the light source(s) may propagate via the light chamber into the flow reactor system (comprised by the reactor chamber). As indicated above, the reactor chamber and the light chamber may comprise light transmissive materials. The light transmissive materials of the reactor chamber and light chamber may be the same or may be different. When the reactor chamber and the light chamber are part of a monolithic body, they will in general comprise essentially the same light transmissive materials. In specific embodiments, only the light chamber comprises light transmissive material. In specific embodiments, (only) the light chamber may be transparent for at least part of the light source radiation. In other embodiments, both the reactor chamber and the light chamber may be transparent for at least part of the light source radiation.

In embodiments, the flow reactor system may comprise a reactor channel, through which the first fluid may be flown. In embodiments, the flow reactor system may be configured to react one or more reactor fluid(s) within flow reactor cells in the reactor channel or comprised by the reactor channel. In further embodiments, the one or more chemicals flown through the flow reactor cells may (also) be reacted with the light source radiation irradiated on the one or more chemicals. The flow reactor system may be configured for hosting the (reactor) fluid to be treated, especially with light source radiation. In embodiments, the flow reactor system may be configured in a radiation receiving relationship with (at least part of) the plurality of light sources. Hence, the first fluid may be transported through the flow reactor system and at least part of the flow reactor system may be irradiated with the radiation.

More especially, the flow reactor system may comprise one or more channels and optionally one or more reaction chamber in fluid contact with the one or more channels. The radiation may be provided to at least part of the one or more channels, or, when one or more reaction chambers are available, alternatively or additionally to the one or more reaction chambers. A reaction chamber may comprise a flow reactor cell. However, the reactor chamber may also be channel, or a part of the channel. Hence, in embodiments the reactor chamber may be channel, having essentially the same cross-sectional dimensions as an upstream channel part and a downstream channel part. However, in other embodiments, such as in the case of a spinning disk reactor, the reactor chamber may have cross-sectional dimensions different from an upstream channel (part) and/or a downstream channel (part).

The reactor fluid may comprise one or more of a liquid and a gas. The term "fluid" may also refer to a combination of two or more different fluids. When the reactor fluid comprises a liquid, the liquid may comprise one liquid or two or more different liquids. The liquid may in embodiments also comprise particulate material. When the reactor fluid comprises a gas, the gas may comprise one type of gas or two or more types of different gasses. The fluid may comprise particulate catalyst material or may comprise a homogenous catalyst, but may in other embodiments also comprise no catalyst. The fluid may comprise an emulsion.

The reactor fluid may comprise at least one or more reactants. Reactants are chemical substances that may take part in the (photo)chemical reaction. The one or more reactants may undergo a chemical change as the (photo)chemical reaction takes place to provide a chemical product. When the (photo)chemical reaction has completed, at least part of the one or more reactants may have become the chemical product. Especially, the reactor fluid may comprise at least two or more reactants, which during the (photo)chemical reaction react with one or more of the other reactants to provide at least one or more chemical product.

In certain embodiments, the photochemical reactor may comprise a catalyst. The catalyst is a chemical substance that does not undergo a chemical change as the (photo)chemical reaction takes place. The catalyst may in embodiments improve the reaction rate of the (photo)chemical reaction. The catalyst may in specific embodiments facilitate the (photo)chemical reaction. As the catalyst does not undergo a chemical change, it may be used over multiple (photo)chemical reactions. The catalyst may be immobilized on part of the reactor chamber and/or on the disk.

Chemical reactions in reactors are known to the person skilled in the art. Further, the irradiation with radiation may in embodiments lead to a chemical reaction, which may also include a dissociation (see further also below).

In specific embodiments, the photochemical reactor may comprise a spinning disk reactor. The spinning disk reactor may comprise a rotatable spinning disk. Such spinning disk may consist of two main parts: a wheel part (or: "wheel") and an axle part (or: "axle"). In embodiments, the wheel part of the spinning disk may be rotatable around a fixed axis defined by the axle part. The axle part may be connected to a further mechanical system comprised by the rotor (described further below). As the mechanical system comprised by the rotor rotates, it may drive the rotation of the axle and wheel parts of the spinning disk.

The spinning disk may be at least partly configured in the reaction chamber. In embodiments, at least the wheel part of the spinning disk may be configured entirely in the reaction chamber. Further, the spinning disk comprising the wheel part and axle part may be entirely configured within the reaction chamber. In other embodiments, at least part of the axle part may be configured outside of the reaction chamber. Moreover, the axle part may be configured entirely outside of the reaction chamber.

The rotational speed of the spinning disk may in embodiments be controlled (with a control system; see also below). In embodiments, the spinning disk may be under on-off control, with a single rotational speed being available when the spinning disk is turned on. In other embodiments, the spinning disk may be able to operate at multiple speed settings when the spinning disk is turned on. In further embodiments, the rotational speed of the spinning disk may increase or decrease in gradual advancement when the spinning disk is turned on.

In embodiments, the spinning disk may be turned on for at least part of the duration of the (photo)chemical reaction. Especially, the spinning disk may be turned on for the entire duration of the (photo)chemical reaction. In other embodiments, the spinning disk may be turned on for a specific duration during the (photo)chemical reaction and turned off after that duration. Further, the spinning disk may be turned on and off at least twice or more during the (photo)chemical reaction.

In embodiments, the spinning disk may have at least one or more rotational speeds during the (photo)chemical reaction. In specific embodiments, especially those wherein the spinning disk only has an on-off control, the spinning disk may retain the same rotational speed during the (photo)chemical reaction. In other embodiments, the spinning disk may change rotational speed at least once or more during the (photo)chemical reaction. In such embodiments where the spinning disk is turned on and off multiple times at least twice or more during the (photo)chemical reaction, the spinning disk may have different rotational speeds. In embodiments, the range of the rotational speed of the spinning disk may be 180°/s - 36000°/s, such as 360°/s - 36000°/s. The range of the rotational speed may especially be 540°/s - 36000°/s, such as 540°/s - 27000°/s. In embodiments, the range of the rotational speed may be 720°/s - 27000°/s, and may especially be 720°/s - 18000°/s. Further, the range of the rotational speed may be 1080°/s - 36000°/s, such as 1080°/s - 18000°/s. Moreover, the range of the rotational speed may be 1440°/s - 18000°/s, such as 1440°/s - 9000°/s.

Through the rotation of the spinning disk, especially the wheel part of the spinning disk, the spinning disk may exert a force on the reactor chamber and/or the fluid in the reactor chamber. This force may result in (i) mixing the first fluid with high efficiency and (ii) increasing the reactor chamber pressure. Mixing the first fluid with high efficiency may result in improved reaction rate and may hence facilitate the reaction to reach equilibrium faster. Increasing the reactor chamber pressure may likewise result in an improved reaction rate and may hence facilitate the reaction to reach equilibrium faster.

In other embodiments, the photochemical reactor may instead comprise a flow reactor. The flow reactor may comprise a reactor channel, through which the first fluid may be flown. In embodiments, the flow reactor may be configured to react one or more rector fluid(s) within flow reactor cells in the reactor channel or comprised by the reactor channel. In further embodiments, the one or more chemicals flown through the flow reactor cells may (also) be reacted with the light source light irradiated on the one or more chemicals. The flow reactor may be configured for hosting the (reactor) fluid to be treated, especially with light source light. In embodiments, the flow reactor system may be configured in a radiation receiving relationship with (at least part of) the plurality of light sources. Hence, a fluid may be transported through the flow reactor system and at least part of the flow reactor system may be irradiated with the radiation.

Within the context of a photochemical reactor, the photochemical reaction of the first fluid may be driven by exposure to light generated by the light source. Mixing the first fluid with high efficiency may result in a more even dispersion of the various compounds in the first fluid and hence more even exposure to the light source light, especially in those embodiments wherein the light source light may not penetrate evenly throughout the reactor chamber. Hence the mixing by the spinning disk may result in an improved reaction rate.

In other embodiments, the reaction driven by the photochemical reactor may comprise a multistep reaction. Especially, such a multistep reaction may comprise at least two or more (photo)chemical reactions. In such embodiments, at least one or more of the two or more (photo)chemical reactions may be a photochemical reaction. In embodiments wherein one or more of the (photo)chemical reactions is not a photochemical reaction, the increased pressure in the reactor chamber by the spinning disk may improve the reaction rate of the one or more reaction steps that is not a photochemical reaction.

The current invention may in embodiments provide a photoreactor assembly comprising a rotor and a stator. In embodiments, the rotor and the stator may be at least partly comprised by the photochemical reactor, the rotor and the stator may especially be entirely comprised by the reactor. The rotor may comprise at least parts of the reactor or reactor chamber that may in operation undergo a rotating motion. The stator may comprise at least parts of the reactor or reactor chamber that may in operation not undergo a rotating motion. Especially, the rotor and stator may be defined relative to one another, wherein the rotor may have a rotating motion relative to the stator during operation of the photoreactor assembly, more especially the rotating disk reactor. Hence, in embodiments the photochemical reactor may essentially consist of the rotor and the stator.

As indicated above, the invention provides a photoreactor assembly comprising an induction based electrical power system. Especially, the induction based electrical power system may comprise an electrical power transmitter-receptor pair comprising at least one electrical power transmitter and at least one electrical power receptor. In a wireless way, the electrical power transmitter may generate electrical power in the electrical power receptor without an electrically conductive connection between the two.

Wireless electrical power may be executed via near-field wireless power and far-field electrical power. In near-field or non-radiative techniques, electrical power may be transferred over relatively short distances by magnetic fields using inductive coupling between coils of wire, or by electric fields using capacitive coupling between metal electrodes. In far-field or radiative techniques, also called power beaming, power is transferred by beams of electromagnetic radiation, like microwaves or laser beams. In embodiments, the wireless electrical powering may especially be established through near-field wireless power transfer, e.g. electromagnetic induction coupling, resonant induction coupling, capacitive coupling, resonant capacitive coupling, electrodynamic wireless power transfer, magneto-dynamic coupling, or Zenneck wave transmission. More especially, the wireless electrical powering may in embodiments be established through electromagnetic induction coupling or capacitive coupling.

Herein, in embodiments especially near-field solutions may be applied. Such near-field wireless power transfer methods allow for the generation of an electrical current in a receptor that is not in electrically conductive contact with a transmitter. Such transmitter and receptor may be referred to as an electrical power transmitter-receptor pair comprising at least one electrical power transmitter and at least one electrical power receptor. Especially, the electrical power transmitter may be configured to transmit electrical energy to the electrical power receptor through wireless power transfer.

The efficiency of the power transfer may depend on (i) the type of wireless power transfer, (ii) material and size properties of the electrical power transmitter, and (iii) a coupling distance d_{P} between the electrical power transmitter and the electrical power receptor. Hence, in such embodiments of the photoreactor assembly that comprise a permanent magnet, the permanent magnet material may be selected to provide a sufficiently strong electromagnetic field (for at least powering the light source arrangement). Further, in embodiments of the photoreactor assembly comprising an electromagnet, configurations may be preferred that exploit the size and turning of the coils to lead to an optimal wireless energy transfer. In embodiments of the photoreactor assembly, configurations may be preferred that decrease the coupling distance d_{P} between the transmitter and receptor to improve the wireless power transfer.

Herein, several solutions are proposed. One solution is based on a rotating magnet and stationary wiring. Another solution may be based on a stationary magnet, and a rotating wiring. Yet, another solution may be based on a stationary electromagnet, and rotating wiring. Yet, a further solution may be based on a stationary electromagnet, and stationary wiring. In the latter solution, electrical power may be generated in the wiring via a varying magnetic field of the electromagnet. In the former three solutions, use may be made of the fact that the assembly may comprise a rotor and a stator, wherein the rotor may comprise the mentioned rotating element, and the stator may comprise the mentioned stationary element. Two further solutions may place the magnet (either as a permanent magnet or electromagnet) external to the reactor with the wiring comprised by the rotor. A third further solution places an electromagnet external to the reactor with the wiring comprised by the stator. In the latter solution, no element of the induction based electrical power system is in relative rotation to another element of the induction based electrical power system, hence this may function only with an electromagnet. Another solution may be stationary wiring and a rotating electromagnet. Such a solution may necessitate careful arrangement of the electrical supply to the electromagnet. This is schematically indicated in below table:

| Embodiment | Rotor (comprised by reactor) | Stator (comprised by reactor) | External from reactor |
|---|---|---|---|
| 1 | Permanent magnet | Light source arrangement + wiring | |
| 2 | Light source arrangement + wiring | Permanent magnet | |
| 3 | Light source arrangement + wiring | Electromagnet | |
| 4 | Light source arrangement + wiring | | Permanent magnet |
| 5 | Light source arrangement + wiring | | Electromagnet |
| 6 | | Light source arrangement + wiring | Electromagnet |
| 7 | Electromagnet | Light source arrangement + wiring | |

Hence, via induction with a permanent magnet or an electromagnet, an electrical current may be generated in the wiring. The term "wiring" may especially refer to one or more (electrically conductive) coils, as is known to the person skilled in the art.

The terms "permanent magnet" and "electromagnet" are known in the art. In the case of an electromagnet, the transmitter may also comprise electrical wiring, such as one or more (electrically conductive) coils.

An electrical power transmitter-receptor pair may in embodiments comprise a plurality of electrical power transmitters. Each transmitter may be configured to generate a magnetic field capable of providing an electrical current to the at least one receptor.

An electrical power-transmitter receptor pair may in embodiments comprise a plurality of electrical power receptors. Each receptor may be configured to receive power from at least one or more magnetic fields generated by at least one or more transmitters.

In embodiments, the electrical power receptor may be functionally coupled to the light source arrangement. The electrical power receptor may be in electrical contact with the light source arrangement. Especially there may be direct electrical contact between the electrical power receptor and the light source arrangement. Such a configuration of the electrical power receptor and the light source arrangement in direct electrical contact may be comprised by a light engine. The electrical current transmitted by the electrical power transmitter through wireless power transfer to the electrical power receptor may as such be provided to the light source arrangement. Hence, the light engine may be powered through wireless energy transfer and hence may not require wiring outside of the light engine.

In further embodiments, the light engine may further comprise a light engine housing. The light engine housing may be configured to encapsulate at least part of the light source arrangement and the electrical power receptor. Especially, the light engine housing may be configured to fully encapsulate the light source arrangement and the electrical power receptor. More especially, the light engine housing may function to fully encapsulate the light source arrangement and electrical power receptor from the external environment. Hence, the light engine housing may shield the light source arrangement and the electrical power receptor from potential safety concerns. The light engine may in such embodiments where the electrical power receptor is comprised by the stator also be comprised by the stator. In other embodiments where the electrical power receptor is comprised by the rotor, the light engine may yet be comprised by the stator.

The rotor may comprise a mechanical system configured to drive a rotating motion. In embodiments, the rotor may be functionally coupled to the spinning disk. Especially, the mechanical system comprised by the rotor may be functionally coupled to the spinning disk, such that the rotating motion is transferred to the spinning disk. Hence, the rotor may drive the rotation of the spinning disk through the mechanical system.

Herein, the term "functionally coupled" may in embodiments refer to a physical connection or mechanical connection between at least two elements, such as via one or more of a screw, a solder, an adhesive, a melt connection, a click connection, etc. The terms "physical connection" and "mechanical connection" may herein interchangeably be used. The terms "physical connection" and "mechanical connection" may thus also refer to an adhesive connection.

In other embodiments, the rotor may comprise the spinning disk. Especially, the mechanical system comprised by the rotor may comprise the axle part of the spinning disk. Hence, the rotating motion of the mechanical system is directly transferred to the spinning disk.

In embodiments, the rotor may comprise further parts of the reactor or reactor chamber. This may depend on the exact configuration of parts in the embodiment, i.e. in certain embodiments the transmitter may be part of the rotor, in other embodiments the transmitter may not be part of the rotor.

The stator may in embodiments comprise all parts of the reactor or reactor chamber that during operation remain static. Especially, the stator may be those parts of the reactor or reactor chamber that during operation remain static relative to the rotor. Such parts comprised by the stator may in embodiments include the reactor chamber walls and the light engine housing.

In embodiments, the stator may comprise further parts of the reactor or reactor chamber. This may depend on the exact configuration of parts in the embodiment, i.e. in certain embodiments the transmitter may be part of the stator, in other embodiments the transmitter may not be part of the stator.

In embodiments, the electrical power transmitter-receptor pair may be configured to generate an electrical current in the electrical power receptor by rotation of one of the electrical power transmitter and the electrical power receptor relative to the other one of the electrical power transmitter and the electrical power receptor. This may in embodiments be accomplished by having either the transmitter or the receptor comprised by the rotor, and having the other of the transmitter or the receptor comprised by the rotor. Through such configuration, either of the transmitter or receptor will have a rotating motion relative to the other of the transmitter or receptor. Hence, an electric current may be generated through the rotative motion of the electromagnetic field generated by the transmitter relative to the receptor.

The electrical power receptor may in embodiments comprise electrical wiring. As described above for electrically conductive elements, the electrical wiring may comprise a metal wire. The metal wire may comprise various metals or metal alloys. The metal wire may comprise two or more different metals or metal alloys with one wrapped around the other. Especially, the electrical wiring may comprise a metal core of the electric conductive element. In embodiments, the electrical wiring may comprise one or more coils of electrical wiring.

The electrical power transmitter may in embodiments comprise a magnet, i.e. a material that may generate an electromagnetic field. In specific embodiments, the magnet may be a permanent magnet, comprising a ferromagnetic material that is magnetized and generates a persistent magnetic field around it.

In other embodiments, the magnet may be an electromagnet, comprising a coiled metal wire that may generate an electromagnetic field when an electric current runs through it. Hence, an electromagnet requires electrical contact to be provided with an electrical current such that it may generate an electromagnetic field. The coiled metal wire may especially be wrapped around an electromagnet core.

In embodiments wherein the electrical power transmitter is a magnet generating an electromagnetic field, the wireless energy transfer depends on the electromotive force (EMF) generated by the magnet. In embodiments, the EMF may be generated through (i) the rotational motion of the rotor leading to the rotation of one of the transmitter or receptor relative to the other of the transmitter or receptor or (ii) the electrical current provided to the electromagnet.

For embodiments with both permanent magnets and electromagnets, the EMF may be controllable via changing the rotational speed. However, in certain embodiments wherein the spinning disk and the transmitter or receptor are comprised by the rotor, especially embodiments wherein the spinning disk comprises the transmitter or receptor, there may be limitations to the rotational speed due to the necessary rotational speed required for the reaction in the fluid. Further, for embodiments with electromagnets, the EMF may be controllable via changing the electrical current provided to the electromagnet.

In specific embodiments, the electrical power receptor may be comprised by the stator and the electrical power transmitter may be comprised by the rotor. In such embodiments, the electrical power receptor may comprise electrical wiring. Moreover, in such embodiments, the electrical power transmitter may comprise a magnet, especially a permanent magnet as delivering an electrical current to the magnet in a rotor may present safety hazards. Hence, the EMF may in such embodiments be controllable based on the rotational speed of the rotor.

In other embodiments, the electrical power receptor may be comprised by the rotor and the electrical power transmitter may be comprised by the stator. In such embodiments, the electrical power receptor may comprise electrical wiring. Moreover, in such embodiments, the electrical power transmitter may comprise a magnet, especially one or more of a permanent magnet and an electromagnet. In such embodiments wherein the magnet is comprised by the stator, it may be possible to deliver an electrical current to the magnet and an electromagnet becomes feasible. Hence, the EMF may in such embodiments be controllable based on the electrical current provided to the (electro)magnet and the rotational speed of the rotor.

In further embodiments, the spinning disk may comprise both the electrical wiring and the light source arrangement as a light engine. In such configuration, the light sources may have close proximity to the area of the reactor chamber which is nearby the spinning disk. This area of the reactor chamber may undergo the highest level of fluid flow due to the rotation of the spinning disk. As this is the area of the reactor chamber that is exposed to the highest levels of light source light, such embodiments may improve the reaction rate of the photochemical reaction by improved light exposure.

Further, in embodiments wherein the light source arrangement is comprised by the rotor, especially wherein the light source arrangement is comprised by the spinning disk, there may be benefits with regards to a plurality of light sources with different light source light. The plurality of light sources may include at least two different light source lights, and the photochemical reaction may require exposure to both types of light source light. When the light source arrangement is comprised by the rotor, the same area of the reactor chamber may exposed to different light sources of the plurality of light sources and hence may be exposed to at least two or more light source light. Hence, such embodiments may further improve the reaction efficiency of the photochemical reaction. Therefore, in embodiments the rotor may comprise a light chamber. More especially, a (spinning) disk may comprise a light chamber.

As the photoreactor may comprise a plurality of reaction chamber, the photoreactor may thus also comprise a plurality of (spinning) disk. Hence, in embodiments the photoreactor may comprise a plurality of reaction chamber, each comprising a disk, and each disk comprising a light chamber. Hence, in embodiments the photochemical assembly may also comprise a plurality of electrical power transmitter-receptor pairs.

In embodiments where the light source arrangement is comprised by the stator, the catalyst may be arranged on the rotor. In such embodiments, the light source arrangement may be readily interchanged when the photochemical assembly is not in operation without necessitating removal of the rotor from the stator. Hence, such configuration may facilitate ease of interchanging of the light source arrangement for maintenance and optionally to provide a different light source arrangement for a different (photo)chemical reaction.

In embodiments where the light source arrangement is comprised by the rotor, the catalyst may be arranged on the stator. In such embodiments, the catalyst may be readily interchanged when the photochemical assembly is not in operation without necessitating removal of the rotor from the stator. Hence, such configuration may facilitate ease of interchanging of the catalyst for maintenance and optionally to provide a different catalyst for a different (photo)chemical reaction.

In embodiments, the photochemical assembly may further comprise a local control system. Such local control system may be configured to control an electrical power provided by the induction based electrical power system to the light source arrangement. As described above, in embodiments the induction based electrical power system may comprise an electrical power transmitter-receptor pair with a wireless energy transfer between them. The electrical energy that the receptor receives from the transmitter may be provided to the light source arrangement. Hence, the electrical energy provided to the light source arrangement relies on the wireless energy transfer between the electrical power transmitter-receptor pair.

As described above, in embodiments wherein the transmitter comprises a magnet, the wireless energy transfer may depend on the EMF. The configuration of the photoreactor assembly may be optimized in terms of decreasing the distance between the transmitter and receptor as well as the increasing the number of turns in the magnetic coil of embodiments comprising electromagnets. The local control system may in embodiments control the rotational speed of the rotor to provide the appropriate electrical current between the transmitter and the receptor. Further, in embodiments comprising an electromagnet, the local control system may further control the electrical current being provided to the electromagnet.

In such embodiments, the local control system may be configured to control the electrical power in dependence of one or more of a predetermined electrical power and a sensor signal. The predetermined electrical power may be an established threshold for the minimum energy required for operation of the light source arrangement. In some embodiments, the predetermined electrical power may be constant as there may be only one setting for operation of the light source arrangement and the rotational speed of the rotor. In other embodiments, the light source arrangement may have different levels of operation, e.g. providing light source light of different wavelengths or levels of intensity. In further embodiments, the rotor may have different levels of operation, e.g. the spinning disk having multiple rotational speeds for different (photo)chemical reactions or at different stages of a (photo)chemical reaction. Hence, the predetermined electrical power in such embodiments may be determined by the mode of operation of the light source arrangement and the rotor.

The sensor may be configured to sense a parameter related to one or more of (i) the first fluid and (ii) a (photo)chemical reaction of the first fluid. The sensor may in embodiments be configured at least partly in the photoreactor chamber. The sensor may in embodiments be configured entirely in the photoreactor chamber. The sensor may be configured to determine at least one or more parameters within the photoreactor chamber, selected from one or more of temperature, absorption of radiation, transmission of radiation, pressure, flow rate, disk rotational speed, catalyst loading, concentration of reactants, fluid pH, electrical conductivity from the fluid, and physicochemical reactant properties (and provide a related sensor signal).

Parameters that may be related to the first fluid may e.g. comprise temperature, absorption of radiation, transmission of radiation, pressure, flow rate, disk rotational speed, fluid pH, electrical conductivity from the fluid, etc.. Such parameters may indicate if the first fluid may be ready for an operational mode of the photoreactor assembly, e.g. the first fluid may need to reach a certain temperature prior to turning on the light source arrangement. Such parameters may also indicate that an operational mode of the photoreactor assembly is within established safety margins, e.g. the photoreactor assembly may only turn on the spinning disk within safe pressure margins of the first fluid.

Parameters that may be related to a (photochemical) reaction of the first fluid may comprise temperature, absorption of radiation, transmission of radiation, catalyst loading, concentration of reactants, fluid pH, electrical conductivity from the fluid, (other) physicochemical reactant properties, etc. Such parameters may indicate that the reactants required for the (photochemical) reaction are present in the fluid, e.g. the photoreactor assembly may turn into a different operational mode once it has determined that the catalyst has been loaded or unloaded from the reactor. Such parameters may also indicate if the (photochemical) reaction has completed and the operational mode of the photoreactor assembly may change, e.g. when the absorption of radiation has decreased below a threshold indicating that a photochemical reactant has completed reacting with another photochemical reactant.

In embodiments, the sensor may comprise at least or more parts to measure the abovementioned parameters. The sensor may comprise a thermometer part to measure the temperature of the reactor fluid. The sensor may comprise at least one or more of a photometer part to measure the absorption and transmission of radiation, especially light source radiation. The sensor may comprise a manometer to measure the pressure of the reactor fluid. The sensor may comprise a flow meter part to measure the flow rate of the reactor fluid and the disk rotational speed. The sensor may comprise a pH meter part to measure the fluid pH. The sensor may comprise a potentiometer part to measure the electrical conductivity from the fluid. The term "sensor" may also refer to a plurality of different sensors.

The sensor may in certain embodiments be provided with (additional) information on the disk rotational speed by the control system. In other embodiments, the sensor may provide the control system with measurements on the rotational disk speed. The disk rotational speed measured by the sensor and provided by the control system may be compared by the sensor or by the control system.

The sensor may further comprise a chemical analysis part to measure the catalyst loading, a concentration of a reagent in the reactor fluid, or a physicochemical reactant property. Such a chemical analysis part may depend on the reactants and type of (photochemical) reaction that may be performed in the embodiment of the photochemical reactor, and may comprise at least one or more of the abovementioned sensor parts and a spectrometer part. Such a spectrometer part may especially be configured to perform nuclear magnetic resonance (NMR) spectroscopy, atomic emission spectroscopy (AES), or mass spectrometry. Such spectrometer part may also comprise a spectrofluorometer, or an optical transmission measurement device, etc.

Especially, in such embodiments, the local control system may be configured to control the electrical power in dependence of at least one or more of the above parameters. For example, at least one or more of the above parameters (e.g. temperature and absorption of radiation) may provide information that the (photo)chemical reaction of the first fluid has completed. The local control system may then shut off electrical current to the electromagnet as there is no further need for exposing the first fluid to the light source light driving the photochemical reaction. Or, in embodiments the local control system may reduce the power provided to the light source arrangement when the generated electrical power exceeds the necessary electrical power. Hence, in embodiments, the local control system may facilitate controlling the operation of the light source arrangement, and optionally operation of the rotor, in response to signals provided by the sensor on the state of the first fluid or the reaction of the first fluid.

Further, in embodiments, the photoreactor assembly may further comprise a local electrical power storage system (or: "power storage system"). Such local electrical power storage system may be functionally coupled to the electrical power receptor. In embodiments, the power storage system may provide additional electrical power to the electrical power receptor that may be required for operation of the light source arrangement. The power storage system may hence be a rechargeable battery.

In certain embodiments, the power storage system may be able to store excess energy transmitted to the electrical power receptor in situations where the transmitted energy exceeds the energy required for operation of the light source arrangement. In embodiments, the power storage system may be charged under conditions where there is an excess of electrical energy being generated for operation of the light source arrangement, while it may provide additional electrical energy under conditions where a deficit of electrical energy is being generated for operation of the light source arrangement. Hence, the power efficiency of the photoreactor assembly may also be improved.

In embodiments, the photoreactor assembly may further comprise a local communication system. Such local communication system may in embodiments be functionally coupled to the local control system. The local communication may receive external signals, especially external wireless signals, e.g. via Bluetooth, Thread, WIFI, LiFi, ZigBee, BLE or WiMAX, or another wireless technology. The local communication system may be configured to receive instructions for the local control system from external of the photochemical reactor. Especially, the local communication system may be configured to receive instructions for the local control system from external of the photoreactor assembly. The local communication system may be comprised by the rotor or the stator. In specific embodiments, the assembly may comprise at least one or more local communication systems in both the rotor and stator. Hence, the local control system may receive signals from external of the photoreactor assembly allowing for remote control of the operation of different parts of the photoreactor assembly by a user.

In embodiments, the assembly may further comprise a control system. The control system may be configured to control the local control system. Hence, in embodiments the control system may be configured to control as a master the sleeve local control system. In other embodiments, the control system may comprise the local control system. The control system may additionally receive signals from the sensor in certain embodiments (e.g. via the local communication system). Especially, the control system may be configured to control at least one or more of (i) a rotational speed of the spinning disk and (ii) the electrical energy that the induction based electrical power system is providing to the light source arrangement. In such embodiments that comprise an electromagnet, the control system may be configured to control an electrical power provided to the electromagnet which may be transmitted to the electrical power receptor. Hence, the control system may be configured to control the operation of the photoreactor assembly. For instance, the control system may be configured to control the light source arrangements, e.g. in dependence of a sensor signal of the sensor.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions from a remote control. In embodiments, the control system may be controlled via an App on a device, such as a portable device, like a Smartphone or I-phone, a tablet, etc.. The device is thus not necessarily coupled to the lighting system, but may be (temporarily) functionally coupled to the lighting system.

Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, Thread, WIFI, LiFi, ZigBee, BLE or WiMAX, or another wireless technology.

The system, or apparatus, or device may execute an action in a "mode" or "operation mode" or "mode of operation" or "operational mode". The term "operational mode may also be indicated as "controlling mode". Likewise, in a method an action or stage, or step may be executed in a "mode" or "operation mode" or "mode of operation" or "operational mode." This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

In embodiments, the photoreactor assembly may comprise a set of light sources comprising at least two light sources configured to generate light source radiation having different spectral power distributions. Especially, in embodiments wherein the spinning disk comprises the light engine, the two light sources may be configured at the same radial position relative to an axis of rotation A of the rotor. In such a configuration, the same area of the reactor chamber may exposed to different light sources of the plurality of light sources and hence may be exposed to at least two or more light source light. As can be derived from the above, the local control system or the control system may be configured to control the light sources (see also below).

Especially, the fluid flow may be higher in the parts of the reactor chamber that are closer to the spinning disk. In embodiments wherein the spinning disk comprises the light engine, the part of the reactor chamber that receive the highest exposure of light source radiation may be the parts with a relatively high fluid flow. Hence, the reaction efficiency of the (photo)chemical reaction may be improved. In further such embodiments wherein at least two light sources in the light engine comprised by the spinning disk are configured to generate light source radiation having different spectral power distributions, the reactor fluid may be exposed to at least two or more light source light at a high rate, which may further improve the reaction efficiency of the (photo)chemical reaction.

In embodiments, the light source arrangement and the electrical power receptor may be at least partly comprised by either the rotor or the stator as a light engine. Especially, the light engine may be encapsulated by the light engine housing as described above. Hence the light engine may be sealed from an external environment and improve the safety of operation of the photoreactor assembly.

In embodiments, the photoreactor assembly may comprise a light transmissive window. The light transmissive window may especially be transmissive for the light source radiation. Moreover, the light transmissive window may separate the light sources from the reactor chamber. The light sources may be configured to irradiate at least part of the reactor chamber via the light transmissive window. Hence, the light transmissive window facilitates irradiation of the first fluid in the reactor chamber while keeping the light sources away from the fluid and pressure inside the reactor chamber. Especially, in embodiments the light transmissive window may separate the light chamber from the reactor chamber. Hence, the light transmissive window may be comprised by the stator or by the rotor (dependent upon where the light source arrangement is configured).

The light transmissive window may comprise a light transmissive material selected from the group of quartz, sapphire, borosilicate glass, sodalime glass, mineral glass, laminated glass, coated glass, etc. The light transmissive material may be selected based on its ability to be transmissive for the light source light. The light transmissive material may be selected based on its ability to withstand the reactor chamber pressure. Especially, the light transmissive window material may be selected based on a balance of the two aforementioned reasons. Further, the light transmissive window material may yet be selected based on further factors, such as cost-effectiveness or availability.

The photoreactor assembly may comprise a plurality of light source arrangements. In such embodiments, the photochemical reactor may comprise (i) a plurality of reactor chambers, functionally coupled to each other, and (ii) a plurality of spinning disks. The photoreactor assembly may hence comprise a plurality of units. Each unit may comprise one or more of the light chambers, one or more of the reactor chambers, and one or more of the spinning disks partly configured in the reaction chamber. Such embodiments may facilitate performing different (photo)chemical reactions simultaneously, or performing the same (photo)chemical reaction in large quantities in multiple units. In further embodiments, the photoreactor assembly may further comprise a fluidic system comprising one or more reactor channels connecting the plurality of reactor chambers. In such embodiments, the fluid system may facilitate a multi-step (photo)chemical reaction taking place in different reactor channels.

In such embodiments, the control system may be configured to individually control the spectral power distribution of the light source light of the respective light source arrangements of the plurality of units. In such embodiments, the multi-step (photo)chemical reaction may be exposed to light source light with different spectral power distribution. Hence, different (photo)chemical reaction steps may be exposed to optimized (photo)chemical conditions.

In further embodiments, the electrical power receptor may comprise electrical wiring and may be comprised by the rotor or the stator, whereas the electrical power transmitter, which may comprises a magnet part, may be arranged external from the photochemical reactor. For instance, a magnet, or electrical wiring for an electromagnet, may surround part of the reactor chamber.

In a further aspect, the invention provides a method for treating a first fluid with light source radiation. In embodiments, the method may comprise providing the first fluid to be treated with light source radiation in embodiments of the photochemical reactor of the photoreactor assembly described above. Further, the method may comprise irradiating the first fluid with the light source radiation.

In such embodiments, the method may comprise transporting the first fluid through the photochemical reactor. Especially, the first fluid may be irradiated with the light source radiation. Further, one or more of the light source radiation of the plurality of light sources may be controlled. A rotational speed of the spinning disk may also be controlled. Moreover, a flow of the first fluid may be controlled. Especially, the electrical power that the induction based electrical power system is providing to the light source arrangement may be controlled. Hence, the method may comprise controlling various parameters involved in the (photochemical) reaction of the first fluid for an efficient outcome of the reaction.

In further embodiments, the method may comprise providing the fluid to be irradiated to the photoreactor assembly comprising a plurality of light source arrangements as described above. In such embodiments, the photoreactor assembly may comprise a fluidic system comprising one or more reactor channels connecting the plurality of reactor chambers through which the fluid may be provided.

In further embodiments, the photoreactor assembly may comprise one or more light source arrangements; wherein the photochemical reactor comprises and one or more reaction chambers (which may be functionally coupled to each other when there are a plurality of reaction chambers), wherein the photoreactor assembly comprises one or more of units, wherein each unit comprises one of the one or more light chambers and one of the one or more reactor chambers.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1A-C schematically depict embodiments of the photoreactor assembly.
Fig. 2 schematically depicts a cross-sectional view of embodiments of the photoreactor assembly.
Fig. 3 schematically depicts an embodiment of the multi-unit photoreactor assembly.
Fig. 4 schematically depicts embodiments of the photoreactor assembly with a control system. The schematic drawings are not necessarily to scale.

### DETAILED DESCRIPTION OF THE EMBODIMENTS

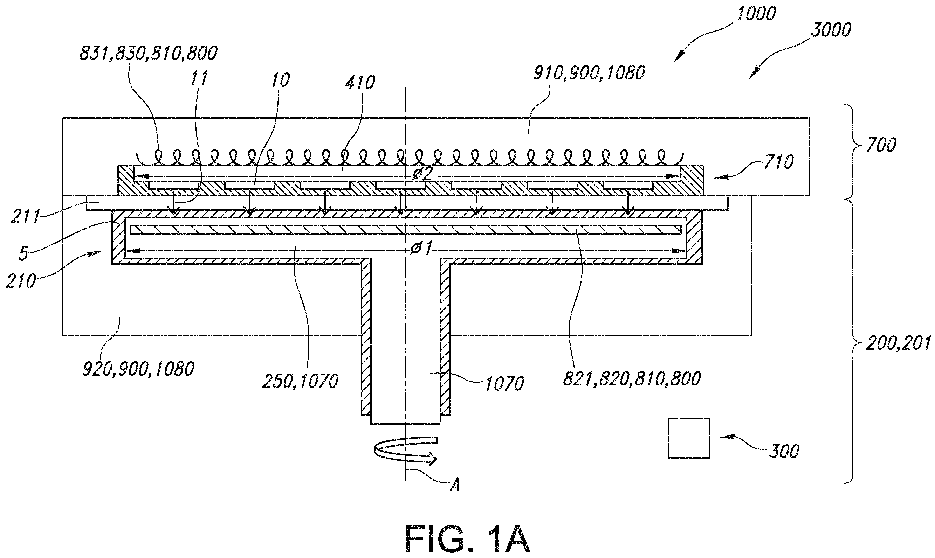

Figs. 1A-C schematically depict embodiments of a photoreactor assembly 1000 comprising (i) a light source arrangement 700, (ii) a photochemical reactor 200, and (iii) an induction based electrical power system 800. In such embodiments, the light source arrangement 700 comprises one or more light sources 10 configured to generate light source radiation 11 selected from one or more of UV radiation, visible radiation, and IR radiation. Especially, the light sources 10 comprise solid state light sources. In embodiments, the photochemical reactor 200 comprises a reactor chamber 210 configured to host a first fluid 5 to be treated with the light source radiation 11. The reactor chamber 210 is configured in a light-receiving relationship with the one or more light sources 10. Further, the photochemical reactor 200 comprises a spinning disk reactor 201, wherein the spinning disk reactor 201 comprises a disk 250 at least partly configured in the reaction chamber 210. In such embodiments, the induction based electrical power system 800 comprises an electrical power transmitter-receptor pair 810, which comprises an electrical power transmitter 820 and an electrical power receptor 830. Especially, the electrical power receptor 830 is functionally coupled to the light source arrangement 700. Reference 710 refers to the light chamber. The light chamber 710 may be separated from the reactor chamber by a light transmissive window 211, see also below.

Further embodiments of such photoreactor assembly 1000 comprise a rotor 1070 and a stator 1080. The rotor 1070 is functionally coupled to the disk 250 or comprises the disk 250. In such embodiments, the electrical power transmitter-receptor pair 810 is configured to generate an electrical current in the electrical power receptor 830 by rotation of one of the electrical power transmitter 820 and the electrical power receptor 830 relative to the other one of the electrical power transmitter 820 and the electrical power receptor 830. Especially, one of the electrical power transmitter 820 and the electrical power receptor 830 is comprised by the stator 1080 and the other one of the electrical power transmitter 820 and the electrical power receptor 830 is comprised by the rotor 1070.

In embodiments, the photoreactor assembly 1000 comprises a photoreactor assembly housing 900 and a control system 300. Especially, the control system 300 may be configured to control a rotational speed of the spinning disk 250 and the energy that the electrical induction based electrical power system 800 is providing to the light source arrangement 700. Further, the light source arrangement 700 and the electrical power receptor 830 are at least partly comprised by the rotor 1070 or the stator 1080 and sealed from an external environment 3000. The spinning disk 250 may have a diameter ø1 and the light engine 900 may have a diameter ø2.

Figs. 1A-B schematically depict embodiments wherein the electrical power receptor 830 comprises electrical wiring 831 and is comprised by the stator 1080. Further, the electrical power transmitter 820 comprises a magnet part 821 and is comprised by the rotor 1070. Especially, the magnet part 821 comprises a permanent magnet.

Further, the photochemical reactor 200 may comprise the light transmissive window 211 that is transmissive for the light source radiation 11. The light transmissive window 211 separates the light sources 10 from the reactor chamber 210. The light sources 10 are configured to irradiate at least part of the reactor chamber 210 via the light transmissive window 211. Especially, such embodiments may have a light source support 410. The photoreactor assembly housing 900 may comprise a light engine housing 910 and a photoreactor chamber housing 920. Hence, in embodiments the light transmissive window 211 separates the light chamber (710) from the reactor chamber 210.

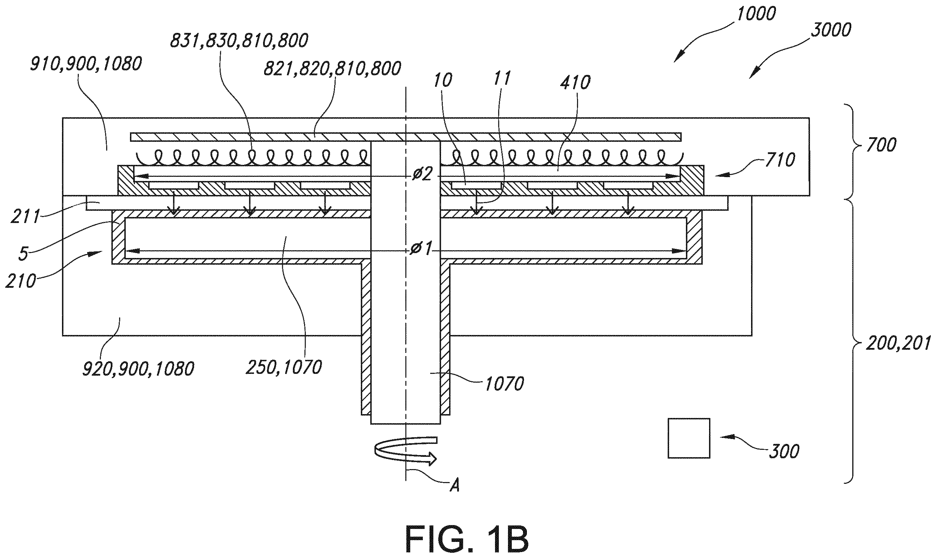

Fig. 1A schematically depicts embodiments wherein the disk 250 comprises the magnet part 821. Fig. 1B schematically depicts embodiments wherein the disk 250 is functionally coupled to the magnet part 821.

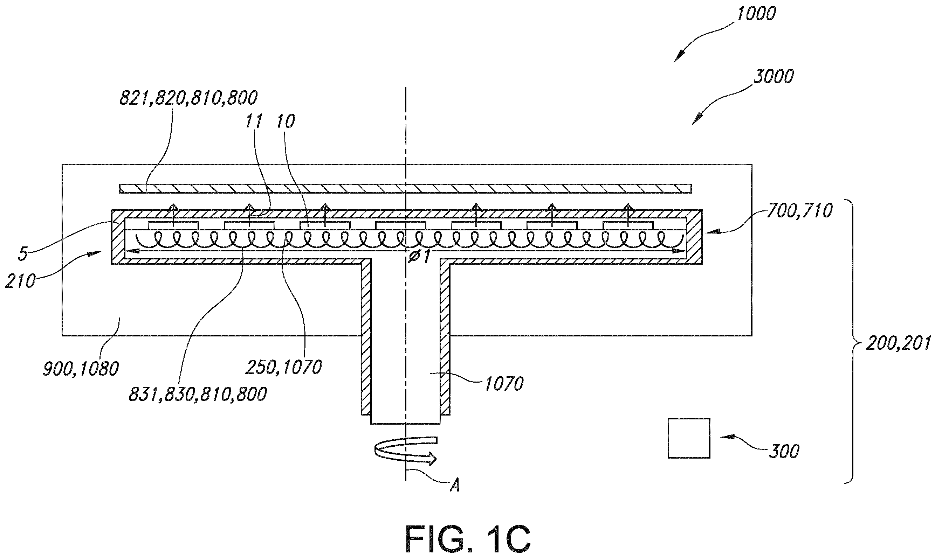

Fig. 1C schematically depicts embodiments wherein the electrical power receptor 830 comprises electrical wiring 831 and is comprised by the rotor 1070. The electrical power transmitter 820 comprises a magnet part 821 and is comprised by the stator 1080. The magnet part 821 comprises one or more of a permanent magnet and an electromagnet. Especially, the disk 250 comprises the light source arrangement 700 and the electrical wiring 831.

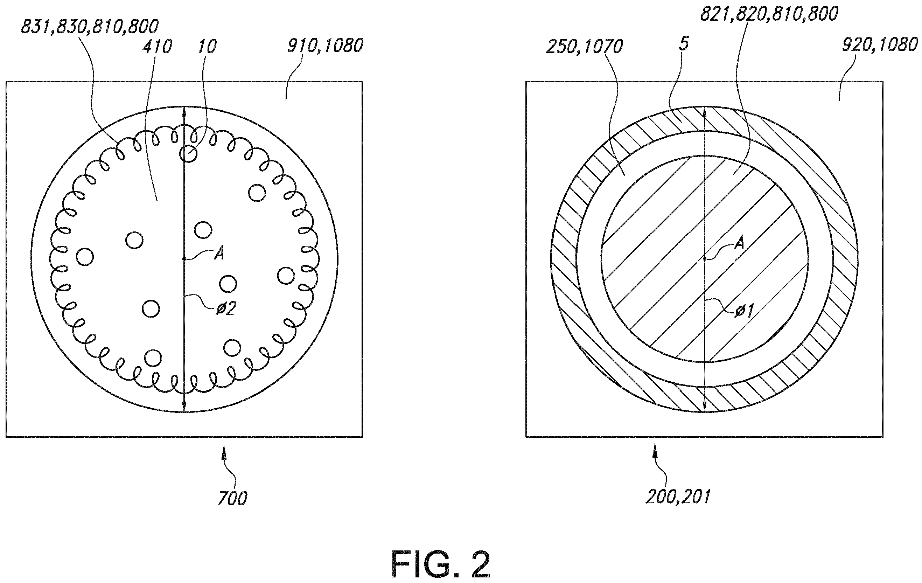

Fig. 2 schematically depicts a cross-sectional view of the embodiments depicted by Fig. 1A.

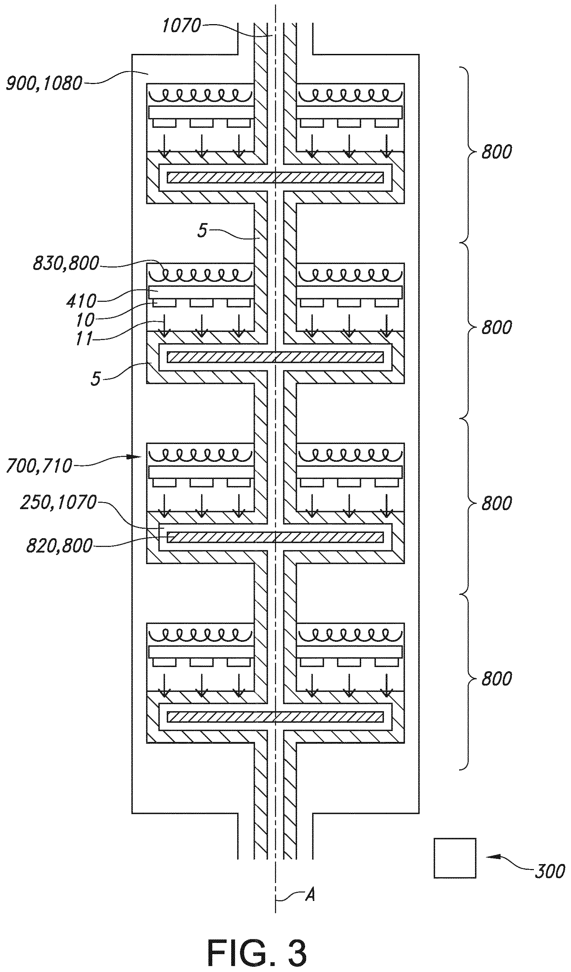

Fig. 3 schematically depicts the photoreactor assembly 1000 comprising a plurality of light source arrangements 700. The photochemical reactor 200 comprises (i) a plurality of reactor chambers 210, functionally coupled to each other, and (ii) a plurality of disks 250. The photoreactor assembly 1000 comprises a plurality of units 800, wherein each unit 800 comprises one of the light chambers 710, one of the reactor chambers 210, and one of the disks 250 partly configured in the reaction chamber 210.

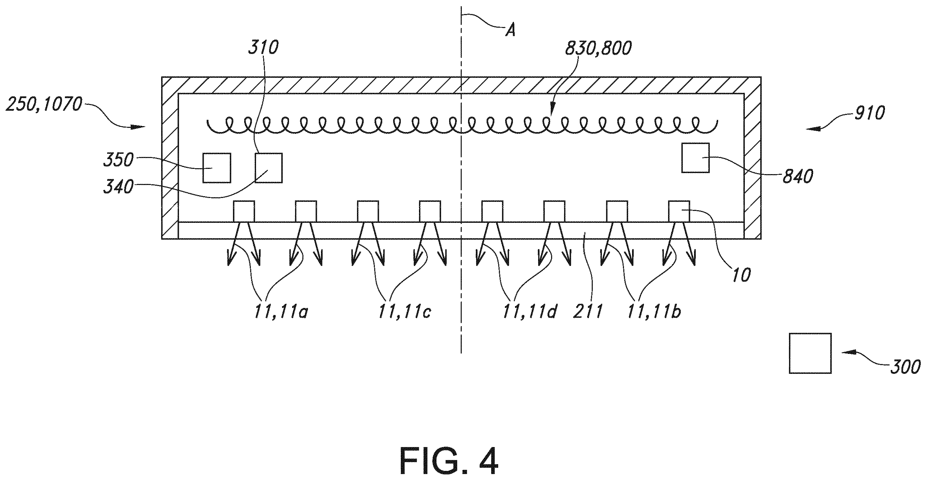

Fig. 4 schematically depicts embodiments comprising a control system 300 the control system 300 is configured to control the local control system 340 or wherein the control system 300 comprises the local control system 340. In such embodiments, the assembly 1000 further comprises a local control system 340. The local control system 340 may be configured to control an electrical power provided via the induction based electrical power system 800 to the light source arrangement 700. The local control system 340 may be configured to control the electrical power in dependence of one or more of a predetermined electrical power and a sensor signal. Such embodiments may further comprise a sensor 310 configured to sense a parameter related to one or more of (i) the first fluid 5 and (ii) a reaction of the first fluid 5. The local control system 340 may be configured to control the electrical power in dependence of the parameter. The parameter may be selected from one or more of temperature, absorption of radiation, transmission of radiation, reflection of radiation, pressure, flow rate, disk rotational speed, catalyst loading, concentration of reactants, fluid pH, electrical conductivity from the fluid, and physicochemical reactant properties. Such embodiments may further comprise a local electrical power storage system 840, functionally coupled to the electrical power receptor 830. Yet further embodiments may comprise a local communication system 350, functionally coupled to the local control system 340 and configured to receive instructions for the local control system 340 from external of the photochemical reactor 200.

Fig. 4 further depicts specific embodiments wherein the disk 250 comprises the light source arrangement 700 and the electrical wiring 831, further comprising a set of light sources 10 comprising at least two light sources 10 configured to generate light source radiation 11 having different spectral power distributions. In such embodiments, the at least two light sources 10 are configured at the same radial position relative to an axis of rotation (A) of the rotor 1070.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage. In yet a further aspect, the invention (thus) provides a software product, which, when running on a computer is capable of bringing about (one or more embodiments of) the method as described herein.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings.

## Claims

1. A photoreactor assembly (1000) comprising (i) a light source arrangement (700), (ii) a photochemical reactor (200), and (iii) an induction based electrical power system (800); wherein:
- the light source arrangement (700) comprises one or more light sources (10), wherein the one or more light sources (10) are configured to generate light source radiation (11) selected from one or more of UV radiation, visible radiation, and IR radiation; wherein the light sources (10) comprise solid state light sources;
- the photochemical reactor (200) comprises a reactor chamber (210) configured to host a first fluid (5) to be treated with the light source radiation (11); wherein the reactor chamber (210) is configured in a light-receiving relationship with the one or more light sources (10);
- the photochemical reactor (200) comprises a spinning disk reactor (201), wherein the spinning disk reactor (201) comprises a disk (250) at least partly configured in the reaction chamber (210);
- the induction based electrical power system (800) comprises an electrical power transmitter-receptor pair (810), which comprises an electrical power transmitter (820) and an electrical power receptor (830), wherein the electrical power receptor (830) is functionally coupled to the light source arrangement (700);
- wherein the photoreactor assembly (1000) further comprising a rotor (1070) and a stator (1080); wherein the rotor (1070) is functionally coupled to the disk (250) or comprises the disk (250); and
- wherein the light source arrangement (700) and the electrical power receptor (830) are at least partly comprised by the rotor (1070) or the stator (1080) and sealed from an external environment (3000).

2. The photoreactor assembly (1000) according to the preceding claim, wherein the electrical power transmitter-receptor pair (810) is configured to generate an electrical current in the electrical power receptor (830) by rotation of one of the electrical power transmitter (820) and the electrical power receptor (830) relative to the other one of the electrical power transmitter (820) and the electrical power receptor (830); wherein one of the electrical power transmitter (820) and the electrical power receptor (830) is comprised by the stator (1080) and the other one of the electrical power transmitter (820) and the electrical power receptor (830) is comprised by the rotor (1070).

3. The photoreactor assembly according to any of the preceding claims, wherein the electrical power receptor (830) comprises electrical wiring (831) and is comprised by the stator (1080); and wherein the electrical power transmitter (820) comprises a magnet part (821) and is comprised by the rotor (1070); wherein the disk (250) comprises the magnet part (821).

4. The photoreactor assembly (1000) according to the preceding claims 1-2, wherein the electrical power receptor (830) comprises electrical wiring (831) and is comprised by the rotor (1070); and wherein the electrical power transmitter (820) comprises a magnet part (821) and is comprised by the stator (1080); wherein the disk (250) comprises the light source arrangement (700) and the electrical wiring (831).

5. The photoreactor assembly (1000) according to any one of the preceding claims, further comprising a local control system (340), wherein the local control system (340) is configured to control an electrical power provided via the induction based electrical power system (800) to the light source arrangement (700); and wherein the local control system (340) is configured to control the electrical power in dependence of one or more of a predetermined electrical power and a sensor signal.

6. The photoreactor assembly (1000) according to claim 5, further comprising a sensor (310) configured to sense a parameter related to one or more of (i) the first fluid (5) and (ii) a reaction of the first fluid (5); wherein the local control system (340) is configured to control the electrical power in dependence of the parameter.

7. The photoreactor assembly (1000) according to any one of the preceding claims 5-6, further comprising a local electrical power storage system (840), functionally coupled to the electrical power receptor (830).

8. The photoreactor assembly (1000) according to any one of the preceding claims 5-7, further comprising a local communication system (350), functionally coupled to the local control system (340) and configured to receive instructions for the local control system (340) from external of the photochemical reactor (200).

9. The photoreactor assembly (1000) according to any one of the preceding claims 5-8, further comprising a control system (300), wherein the control system (300) is configured to control the local control system (340) or wherein the control system (300) comprises the local control system (340), wherein the control system (300) is configured to control a rotational speed of the spinning disk (250) and the energy that the electrical induction based electrical power system (800) is providing to the light source arrangement (700).

10. The photoreactor assembly (1000) according to any one of the preceding claims, comprising a set of light sources (10) comprising at least two light sources (10) configured to generate light source radiation (11) having different spectral power distributions, wherein the at least two light sources (10) are configured at the same radial position relative to an axis of rotation (A) of the rotor (1070); wherein the disk (250) comprises the light source arrangement (700) and the electrical wiring (831) according to claim 4.

11. The photoreactor assembly (1000) according to any of the preceding claims, wherein the light source arrangement is sealed from the external environment (3000) without power supply cables.

12. The photoreactor assembly (1000) according to any of the preceding claims, wherein the photochemical reactor (200) comprises a light transmissive window (211) that is transmissive for the light source radiation (11); wherein the light transmissive window (211) separates the light sources (10) from the reactor chamber (210); wherein the light sources (10) are configured to irradiate at least part of the reactor chamber (210) via the light transmissive window (211); and wherein the light transmissive window (211) comprises a light transmissive material selected from the group of quartz, sapphire, borosilicate glass, sodalime glass, mineral glass, laminated glass, coated glass.

13. The photoreactor assembly (1000) according to any one of the preceding claims; wherein the photoreactor assembly (1000) comprises a plurality of light source arrangements (700); wherein the photochemical reactor (200) comprises (i) a plurality of reactor chambers (210), functionally coupled to each other, and (ii) a plurality of disks (250); wherein the photoreactor assembly (1000) comprises a plurality of units (800), wherein each unit (800) comprises one of the light chambers (710), one of the reactor chambers (210), and one of the disks (250) partly configured in the reaction chamber (210).

14. A method for treating a first fluid (5) with light source radiation (11), wherein the method comprises:
- providing the first fluid (5) to be treated with the light source radiation (11) in the photochemical reactor (200) of the photoreactor assembly (1000) according to any one of the preceding claims; and
- irradiating the first fluid (5) with the light source radiation (11).

15. The method according to claim 14, further comprising:
- transporting the first fluid (5) through the photochemical reactor (200) while irradiating the first fluid (5) with the light source radiation (11) and controlling one or more of (i) the light source radiation (11) of the one or more light sources (10), (ii) a rotational speed of the spinning disk (250), (iii) a flow of the first fluid (5), and (iv) the electrical power that the induction based electrical power system (800) is providing to the light source arrangement (700).

## Patentansprüche

1. Fotoreaktorbaugruppe (1000), umfassend (i) eine Lichtquellenanordnung (700), (ii) einen fotochemischen Reaktor (200) und (iii) ein auf Induktion basierendes Elektroleistungssystem (800); wobei:
- die Lichtquellenanordnung (700) eine oder mehrere Lichtquellen (10) umfasst, wobei die eine oder die mehreren Lichtquellen (10) konfiguriert sind, um Lichtquellenstrahlung (11), die aus einer oder mehreren von UV-Strahlung, sichtbarer Strahlung und IR-Strahlung ausgewählt ist, zu erzeugen; wobei die Lichtquellen (10) Festkörperlichtquellen umfassen;
- der fotochemische Reaktor (200) eine Reaktorkammer (210) umfasst, die konfiguriert ist, um ein erstes Fluid (5), das mit der Lichtquellenstrahlung (11) zu behandeln ist, aufzunehmen; wobei die Reaktorkammer (210) in einer lichtempfangenden Beziehung mit der einen oder den mehreren Lichtquellen (10) konfiguriert ist;
- der fotochemische Reaktor (200) einen Drehscheibenreaktor (201) umfasst, wobei der Drehscheibenreaktor (201) eine Scheibe (250), die mindestens teilweise in der Reaktionskammer (210) angeordnet ist, umfasst;
- das auf Induktion basierende Elektroleistungssystem (800) ein Elektroleistungs-Sender-Empfänger-Paar (810) umfasst, das einen Elektroleistungssender (820) und einen Elektroleistungsempfänger (830) umfasst, wobei der Elektroleistungsempfänger (830) mit der Lichtquellenanordnung (700) funktional gekoppelt ist;
- wobei die Fotoreaktorbaugruppe (1000) ferner einen Rotor (1070) und einen Stator (1080) umfasst; wobei der Rotor (1070) mit der Scheibe (250) funktional gekoppelt ist oder die Scheibe (250) umfasst; und
- wobei die Lichtquellenanordnung (700) und der Elektroleistungsempfänger (830) mindestens teilweise von dem Rotor (1070) oder dem Stator (1080) umfasst und gegenüber einer externen Umgebung (3000) abgedichtet sind.

2. Fotoreaktorbaugruppe (1000) nach dem vorstehenden Anspruch, wobei das Elektroleistungs-Sender-Empfänger-Paar (810) konfiguriert ist, um einen elektrischen Strom in dem Elektroleistungsempfänger (830) durch Rotation eines von dem Elektroleistungssender (820) und dem Elektroleistungsempfänger (830) relativ zu dem anderen einen von dem Elektroleistungssender (820) und dem Elektroleistungsempfänger (830) zu erzeugen; wobei einer von dem Elektroleistungssender (820) und dem Elektroleistungsempfänger (830) von dem Stator (1080) umfasst ist und der andere eine von dem Elektroleistungssender (820) und dem Elektroleistungsempfänger (830) von dem Rotor (1070) umfasst ist.

3. Fotoreaktorbaugruppe nach einem der vorstehenden Ansprüche, wobei der Elektroleistungsempfänger (830) eine Elektroverdrahtung (831) umfasst und von dem Stator (1080) umfasst ist; und wobei der Elektroleistungssender (820) ein Magnetteil (821) umfasst und von dem Rotor (1070) umfasst wird; wobei die Scheibe (250) das Magnetteil (821) umfasst.

4. Fotoreaktorbaugruppe (1000) nach den vorstehenden Ansprüchen 1 bis 2, wobei der Elektroleistungsempfänger (830) die Elektroverdrahtung (831) umfasst und von dem Rotor (1070) umfasst ist; und wobei der Elektroleistungssender (820) ein Magnetteil (821) umfasst und von dem Stator (1080) umfasst wird; wobei die Scheibe (250) die Lichtquellenanordnung (700) und die Elektroverdrahtung (831) umfasst.

5. Fotoreaktorbaugruppe (1000) nach einem der vorstehenden Ansprüche, ferner umfassend ein lokales Steuersystem (340), wobei das lokale Steuersystem (340) konfiguriert ist, um eine Elektroleistung, die über das auf Induktion basierende Elektroleistungssystem (800) an die Lichtquellenanordnung (700) bereitgestellt wird, zu steuern; und wobei das lokale Steuersystem (340) konfiguriert ist, um die Elektroleistung in Abhängigkeit von einer oder mehreren einer zuvor bestimmten Elektroleistung und einem Sensorsignal zu steuern.

6. Fotoreaktorbaugruppe (1000) nach Anspruch 5, ferner umfassend einen Sensor (310), der konfiguriert ist, um einen Parameter, der sich auf eines oder mehrere von (i) dem ersten Fluid (5) und (ii) einer Reaktion des ersten Fluids (5) bezieht, zu erfassen; wobei das lokale Steuersystem (340) konfiguriert ist, um die Elektroleistung in Abhängigkeit von dem Parameter zu steuern.

7. Fotoreaktorbaugruppe (1000) nach einem der vorstehenden Ansprüche 5 bis 6, ferner umfassend ein lokales Elektroleistungsspeichersystem (840), das mit dem Elektroleistungsempfänger (830) funktional gekoppelt ist.

8. Fotoreaktorbaugruppe (1000) nach einem der vorstehenden Ansprüche 5 bis 7, ferner umfassend ein lokales Kommunikationssystem (350), das mit dem lokalen Steuersystem (340) funktional gekoppelt und konfiguriert ist, um Anweisungen für das lokale Steuersystem (340) von außerhalb des fotochemischen Reaktors (200) zu empfangen.

9. Fotoreaktorbaugruppe (1000) nach einem der vorstehenden Ansprüche 5 bis 8, ferner umfassend ein Steuersystem (300), wobei das Steuersystem (300) konfiguriert ist, um das lokale Steuersystem (340) zu steuern, oder wobei das Steuersystem (300) das lokale Steuersystem (340) umfasst, wobei das Steuersystem (300) konfiguriert ist, um eine rotatorische Geschwindigkeit der Drehscheibe (250) und die Energie zu steuern, die das auf elektrischer Induktion basierende Elektroleistungssystem (800) der Lichtquellenanordnung (700) bereitstellt.

10. Fotoreaktorbaugruppe (1000) nach einem der vorstehenden Ansprüche, umfassend einen Satz von Lichtquellen (10), umfassend mindestens zwei Lichtquellen (10), die konfiguriert sind, um Lichtquellenstrahlung (11), die unterschiedliche spektrale Leistungsverteilungen aufweist, zu erzeugen, wobei die mindestens zwei Lichtquellen (10) an der gleichen radialen Position relativ zu einer Rotationsachse (A) des Rotors (1070) konfiguriert sind; wobei die Scheibe (250) die Lichtquellenanordnung (700) und die Elektroverdrahtung (831) nach Anspruch 4 umfasst.

11. Fotoreaktorbaugruppe (1000) nach einem der vorstehenden Ansprüche, wobei die Lichtquellenanordnung gegenüber der äußeren Umgebung (3000) ohne Leistungsversorgungskabel abgedichtet ist.

12. Fotoreaktorbaugruppe (1000) nach einem der vorstehenden Ansprüche, wobei der fotochemische Reaktor (200) ein lichtdurchlässiges Fenster (211) umfasst, das für die Lichtquellenstrahlung (11) durchlässig ist; wobei das lichtdurchlässige Fenster (211) die Lichtquellen (10) von der Reaktorkammer (210) trennt; wobei die Lichtquellen (10) konfiguriert sind, um mindestens einen Teil der Reaktorkammer (210) über das lichtdurchlässige Fenster (211) zu bestrahlen; und wobei das lichtdurchlässige Fenster (211) ein lichtdurchlässiges Material, das aus der Gruppe von Quarz, Saphir, Borosilikatglas, Kalknatronglas, Mineralglas, Verbundglas, beschichtetem Glas ausgewählt ist, umfasst.

13. Fotoreaktorbaugruppe (1000) nach einem der vorstehenden Ansprüche; wobei die Fotoreaktorbaugruppe (1000) eine Vielzahl von Lichtquellenanordnungen (700) umfasst; wobei der fotochemische Reaktor (200) (i) eine Vielzahl von Reaktorkammern (210), die funktional miteinander gekoppelt sind, und (ii) eine Vielzahl von Scheiben (250) umfasst; wobei die Fotoreaktorbaugruppe (1000) eine Vielzahl von Einheiten (800) umfasst, wobei jede Einheit (800) eine der Lichtkammern (710), eine der Reaktorkammern (210) und eine der Scheiben (250), die teilweise in der Reaktionskammer (210) konfiguriert ist, umfasst.

14. Verfahren zum Behandeln eines ersten Fluids (5) mit Lichtquellenstrahlung (11), wobei das Verfahren umfasst:
- Bereitstellen des ersten Fluids (5), das mit der Lichtquellenstrahlung (11) zu behandeln ist, in dem fotochemischen Reaktor (200) der Fotoreaktorbaugruppe (1000) nach einem der vorstehenden Ansprüche; und
- Bestrahlen des ersten Fluids (5) mit der Lichtquellenstrahlung (11).

15. Verfahren nach Anspruch 14, ferner umfassend:
- Transportieren des ersten Fluids (5) durch den fotochemischen Reaktor (200) hindurch während des Bestrahlens des ersten Fluids (5) mit der Lichtquellenstrahlung (11) und Steuern einer oder mehrerer von (i) der Lichtquellenstrahlung (11) der einen oder der mehreren Lichtquellen (10), (ii) einer rotatorischen Geschwindigkeit der Drehscheibe (250), (iii) einer Strömung des ersten Fluids (5) und (iv) der Elektroleistung, die das auf Induktion basierende Elektroleistungssystem (800) der Lichtquellenanordnung (700) bereitstellt.

## Revendications

1. Ensemble photoréacteur (1000) comprenant (i) un agencement de source de lumière (700), (ii) un réacteur photochimique (200) et (iii) un système d'alimentation électrique à induction (800) ; dans lequel :
- l'agencement de source de lumière (700) comprend une ou plusieurs sources de lumière (10), dans lequel la ou les sources de lumière (10) sont configurées pour générer un rayonnement de source de lumière (11) choisi parmi un ou plusieurs d'un rayonnement UV, un rayonnement visible et un rayonnement IR ; dans lequel les sources de lumière (10) comprennent des sources de lumière à semi-conducteurs ;
- le réacteur photochimique (200) comprend une chambre de réacteur (210) conçue pour accueillir un premier fluide (5) à traiter avec le rayonnement de source de lumière (11) ; dans lequel la chambre de réacteur (210) est conçue dans une relation de réception de lumière avec la ou les sources de lumière (10) ;
- le réacteur photochimique (200) comprend un réacteur à disque rotatif (201), dans lequel le réacteur à disque rotatif (201) comprend un disque (250) au moins partiellement conçu dans la chambre de réaction (210) ;
- le système d'alimentation électrique à induction (800) comprend une paire émetteur-récepteur d'énergie électrique (810), qui comprend un émetteur d'énergie électrique (820) et un récepteur d'énergie électrique (830), dans lequel le récepteur d'énergie électrique (830) est accouplé de manière fonctionnelle à l'agencement de source de lumière (700) ;
- dans lequel l'ensemble photoréacteur (1000) comprend en outre un rotor (1070) et un stator (1080) ; dans lequel le rotor (1070) est accouplé de manière fonctionnelle au disque (250) ou comprend le disque (250) ; et
- dans lequel l'agencement de source de lumière (700) et le récepteur d'énergie électrique (830) sont au moins partiellement compris par le rotor (1070) ou le stator (1080) et étanches à un environnement externe (3000).

2. Ensemble photoréacteur (1000) selon la revendication précédente, dans lequel la paire émetteur-récepteur d'énergie électrique (810) est configurée pour générer un courant électrique dans le récepteur d'énergie électrique (830) par rotation de l'un parmi l'émetteur d'énergie électrique (820) et le récepteur d'énergie électrique (830) par rapport à l'autre parmi l'émetteur d'énergie électrique (820) et le récepteur d'énergie électrique (830) ; dans lequel l'un parmi l'émetteur d'énergie électrique (820) et le récepteur d'énergie électrique (830) est compris par le stator (1080) et l'autre parmi l'émetteur d'énergie électrique (820) et le récepteur d'énergie électrique (830) est compris par le rotor (1070).

3. Ensemble photoréacteur selon l'une quelconque des revendications précédentes, dans lequel le récepteur de puissance électrique (830) comprend un câblage électrique (831) et est compris par le stator (1080) ; et dans lequel l'émetteur d'énergie électrique (820) comprend une partie aimant (821) et est compris dans le rotor (1070) ; dans lequel le disque (250) comprend la partie aimant (821).

4. Ensemble photoréacteur (1000) selon les revendications 1 à 2 précédentes, dans lequel le récepteur d'énergie électrique (830) comprend un câblage électrique (831) et est compris par le rotor (1070) ; et dans lequel l'émetteur d'énergie électrique (820) comprend une partie aimant (821) et est compris par le stator (1080) ; dans lequel le disque (250) comprend l'agencement de source de lumière (700) et le câblage électrique (831).

5. Ensemble photoréacteur (1000) selon l'une quelconque des revendications précédentes, comprenant en outre un système de commande local (340), dans lequel le système de commande local (340) est configuré pour commander une puissance électrique fournie par l'intermédiaire du système d'alimentation électrique à induction (800) à l'agencement de source de lumière (700) ; et dans lequel le système de commande local (340) est configuré pour commander la puissance électrique en fonction d'une ou plusieurs parmi une puissance électrique prédéterminée et un signal de capteur.

6. Ensemble photoréacteur (1000) selon la revendication 5, comprenant en outre un capteur (310) configuré pour détecter un paramètre lié à un ou plusieurs parmi (i) le premier fluide (5) et (ii) une réaction du premier fluide (5) ; dans lequel le système de commande local (340) est configuré pour commander la puissance électrique en fonction du paramètre.

7. Ensemble photoréacteur (1000) selon l'une quelconque des revendications 5 à 6 précédentes, comprenant en outre un système local de stockage d'énergie électrique (840), accouplé de manière fonctionnelle au récepteur d'énergie électrique (830).

8. Ensemble photoréacteur (1000) selon l'une quelconque des revendications 5 à 7 précédentes, comprenant en outre un système de communication local (350), accouplé de manière fonctionnelle au système de commande local (340) et configuré pour recevoir des instructions pour le système de commande local (340) de l'extérieur du réacteur photochimique (200).

9. Ensemble photoréacteur (1000) selon l'une quelconque des revendications 5 à 8 précédentes, comprenant en outre un système de commande (300), dans lequel le système de commande (300) est configuré pour commander le système de commande local (340) ou dans lequel le système de commande (300) comprend le système de commande local (340), dans lequel le système de commande (300) est configuré pour commander une vitesse de rotation du disque rotatif (250) et l'énergie que le système d'alimentation électrique à induction électrique (800) fournit à l'agencement de source de lumière (700).

10. Ensemble photoréacteur (1000) selon l'une quelconque des revendications précédentes, comprenant un ensemble de sources de lumière (10) comprenant au moins deux sources de lumière (10) configurées pour générer un rayonnement de source de lumière (11) ayant des distributions de puissance spectrale différentes, dans lequel les au moins deux sources de lumière (10) sont conçues au niveau de la même position radiale par rapport à un axe de rotation (A) du rotor (1070) ; dans lequel le disque (250) comprend l'agencement de source de lumière (700) et le câblage électrique (831) selon la revendication 4.

11. Ensemble photoréacteur (1000) selon l'une quelconque des revendications précédentes, dans lequel l'agencement de source de lumière est isolé de l'environnement externe (3000) sans câbles d'alimentation électrique.

12. Ensemble photoréacteur (1000) selon l'une quelconque des revendications précédentes, dans lequel le réacteur photochimique (200) comprend une fenêtre transmissive de lumière (211) qui est transmissive pour le rayonnement de source de lumière (11) ; dans lequel la fenêtre transmissive de lumière (211) sépare les sources de lumière (10) de la chambre de réacteur (210) ; dans lequel les sources de lumière (10) sont configurées pour irradier au moins une partie de la chambre de réacteur (210) par l'intermédiaire de la fenêtre transmissive de lumière (211) ; et dans lequel la fenêtre transmissive de lumière (211) comprend un matériau transmissif de lumière choisi dans le groupe de quartz, saphir, verre borosilicate, verre sodalime, verre minéral, verre feuilleté, verre revêtu.

13. Ensemble photoréacteur (1000) selon l'une quelconque des revendications précédentes ; dans lequel l'ensemble photoréacteur (1000) comprend une pluralité d'agencements de source de lumière (700) ; dans lequel le réacteur photochimique (200) comprend (i) une pluralité de chambres de réacteur (210), accouplées de manière fonctionnelle les unes aux autres, et (ii) une pluralité de disques (250) ; dans lequel l'ensemble photoréacteur (1000) comprend une pluralité d'unités (800), dans lequel chaque unité (800) comprend l'une des chambres de lumière (710), l'une des chambres de réacteur (210), et l'un des disques (250) partiellement conçus dans la chambre de réaction (210).

14. Procédé permettant de traiter un premier fluide (5) avec un rayonnement de source de lumière (11), dans lequel le procédé comprend :
- la fourniture du premier fluide (5) à traiter avec le rayonnement de source de lumière (11) dans le réacteur photochimique (200) de l'ensemble photoréacteur (1000) selon l'une quelconque des revendications précédentes ; et
- l'exposition du premier fluide (5) au rayonnement de source de lumière (11).

15. Procédé selon la revendication 14, comprenant en outre :
- le transport du premier fluide (5) à travers le réacteur photochimique (200) tout en irradiant le premier fluide (5) avec le rayonnement de source de lumière (11) et en commandant un ou plusieurs parmi (i) le rayonnement de source de lumière (11) de la ou des sources de lumière (10), (ii) une vitesse de rotation du disque rotatif (250), (iii) un écoulement du premier fluide (5), et (iv) la puissance électrique que le système d'alimentation électrique à induction (800) fournit à l'agencement de source de lumière (700).
